# EUROPEAN PATENT SPECIFICATION

(11) **EP 3 118 114 B1**
(45) Date of publication and mention of the grant of the patent: **04.12.2019**
(21) Application number: 16174368.7
(22) Date of filing: 14.06.2016
(51) Int. Cl.: B64D 11/02

(54) **SANITARY MODULE COMPRISING A FOLDING ALCOVE FOR AN AIRCRAFT AND AIRCRAFT DOOR REGION**
SANITÄRMODUL MIT EINER KLAPPBAREN ALKOVE FÜR EIN FLUGZEUG UND FLUGZEUGTÜRBEREICH
MODULE SANITAIRE COMPRENANT UNE ALCÔVE PLIANTE POUR UN AVION ET RÉGION DE PORTE D'AVION

(30) Priority: 25.06.2015 DE 102015211813
(43) Date of publication of application: 18.01.2017
(73) Proprietor: Airbus Operations GmbH, 21129 Hamburg (DE)
(72) Inventor: GONNSEN, Johannes, 21129 Hamburg (DE)
(74) Representative: Isarpatent

(56) References cited:
- EP-A1- 2 902 322
- EP-A2- 1 338 508
- US-A- 4 589 463
- US-B2- 8 720 827

## Description

The present invention relates to a sanitary module comprising a folding alcove for an aircraft and to an aircraft door region comprising a sanitary module of this type.

In some situations, it is necessary for the aircrew of an aircraft to be available to the passengers at the aircraft door so that they can help them exit or enter. In addition to the systematic entry and exit, this can be required for example in the event of emergencies as a result of safety regulations. In this case, the aircrew can oversee the evacuation of the aircraft and help passengers with any problems when exiting the aircraft. For this purpose, the aircrew usually stands inside the aircraft directly in the region of the aircraft door. In many cases, specifically for this purpose, a special region is provided in the interior of the aircraft which is also referred to as an "assist space" or "assistance space".

An assist space of this type can be produced in various ways. To the side of the entry region of an aircraft, there are often various fixtures which are provided for use by the crew or the passengers of the aircraft. Such fixtures are also referred to as monuments and comprise in particular sanitary modules (e.g. toilets) and galleys. A solution can accordingly consist in providing an assist space in or on such a monument. DE 10 2011 109 390 A1, DE 10 2011 116 523 A1 and DE 10 2011 013 049 A1 thus describe different possibilities for accommodating an assist space in the region of an entry door. In these cases, either a recess is provided in one of the monuments or a specific region in the arrangement of the monuments is taken out and made available to the aircrew. Document US8720827, shows another known solution of the prior art in which the entry door to the sanitary module is folded inwards in order to provide an assist space. This documents discloses a sanitary module, comprising a folding door, for an aircraft, having: a side wall which forms a stationary vertical portion of an outer wall of the sanitary module; a door which forms a movable vertical portion of the outer wall of the sanitary module and can be moved into an inner space of the sanitary module; so that the door can be moved into the inner space of the sanitary module to create a folded-out state of the folding door in such a way that an assist space is formed in the outer wall of the sanitary module by the door and the folding connections; and wherein the connections can be folded in to create a folded-in state of the folding alcove in such a way that the door is in contact with the side wall.

In view of the above, the object of the present invention is that of identifying solutions for creating additional space in the region of an aircraft door which can be configured flexibly and at short notice according to the flight situation in each case.

According to the invention, this object is achieved by a sanitary module having the features of claim 1, by an aircraft door region having the features of claim 10 and by an aircraft having the features of claim 14.

Accordingly, a sanitary module comprising a folding alcove for an aircraft is provided. The sanitary module comprises a side wall which forms a stationary vertical portion of an outer wall of the sanitary module. The sanitary module further comprises an alcove wall which forms a movable vertical portion of the outer wall of the sanitary module and can be moved into an inner space of the sanitary module. The sanitary module further comprises two folding connections, which each connect a vertical longitudinal edge of the cubicle wall to a vertical longitudinal edge of the side wall and form the folding alcove together with the alcove wall. The folding connections can be folded out into the inner space of the sanitary space so that the alcove wall can be moved into the inner space of the sanitary module to create a folded-out state of the folding alcove in such a way that an alcove is formed in the outer wall of the sanitary module by the alcove wall and the folding connections. The folding connections can be folded in to create a folded-in state of the folding alcove in such a way that the alcove wall is in contact with the side wall.

Furthermore, an aircraft door region is provided. The aircraft door region comprises a first aircraft door, a first entry region which is adjacent to the first aircraft door, and a sanitary module according to the invention, the outer wall of which is adjacent to the first entry region. The folding alcove of the sanitary module is formed in a portion of the outer wall of the sanitary module which faces the first entry region.

Furthermore, an aircraft comprising an aircraft door region according to the invention is provided.

The concept on which the present invention is based consists in providing a means with which an assist space can be created quickly and simply in specific flight situations without losing the corresponding space for other purposes outside these specific flight situations. The solution according to the invention is based on the knowledge that, in typical passenger aircraft, a sanitary module is located directly next to the entry region of the aircraft door, optionally an outer wall of the sanitary module being adjacent to the entry region, and a door for entry to the sanitary module leading into an aisle of the aircraft, which is arranged substantially perpendicularly to the entry region. Often, such a configuration or a similar configuration is selected so that the sanitary module can be used by the passengers via the aisle during flight, without said passengers having to enter the entry region and a region which is often adjacent thereto for the aircrew which optionally comprises a rest area and/or a galley, etc. The entry region or aircrew region is in fact often separated from the passenger cabin during the flight by a curtain or a partition. However, the assist space is usually only required in flight situations in which the sanitary module cannot and/or must not be used. This fact, together with the above-described geometric arrangement of the aircraft entry region, is made use of by the present invention.

Accordingly, in the present case, an assist space can be created by simply moving a portion of the outer wall of the sanitary module which is adjacent to the entry region into the inner space of the sanitary module. By means of the folding in or out of the folding alcove according to the invention, an assist space can be provided quickly and simply at any time. This thus has the considerable advantage that this space is otherwise fully available, namely as an inner space of the sanitary module. At the same time, however, in specific flight situations, additional space can be created which the aircrew can enter in order for example to assist the passengers in the region of the aircraft door.

Advantageous embodiments and developments are set out in the further dependent claims and in the description with reference to the figures.

According to one development, the folding connections can each comprise one or more folding walls. The folding walls can be connected to one another and/or to the side wall and/or to the alcove wall. In this development, a folding connection can be designed having a certain similarity to a folding door. The folding connection can consist of a plurality of folding walls which are fixed together one behind the other, a folding wall at the end being connected to a vertical longitudinal edge of the side wall, and a corresponding folding wall at the end being connected to a longitudinal edge of the alcove wall. A person skilled in the art will directly derive herefrom an array of similar or alternative solutions for designing the folding connection. For example, the folding connection can be designed similarly to the bellows of an accordion comprising a plurality of folded faces or walls.

According to one development, the folding walls can be connected by means of vertical hinged joints. Alternatively, hinge(d joint)s or other solutions which are known to a person skilled in the art from other technical fields can also be used in this case. In principle, solutions without hinged connections are also conceivable, for example in which the folding connection consists of a single wall or layer having a plurality of folds.

According to one development, the folding walls can also be designed to be flexible. Accordingly, said walls can consist for example of a thin, smooth and flexible plastics material or the like. In principle, however, said walls can also be constructed for example from a textile-like material.

According to one development, the alcove wall in the folded-in state of the folding alcove can end flush with the side wall. In this development, the alcove wall blends into the outer wall of the sanitary module in an inconspicuous and practically "invisible" manner so that it is visually pleasing.

In one development, the folding alcove can be dimensioned in such a way that the alcove can accommodate a standing person fully or at least to a large extent in the folded-out state of the folding alcove. The assist space which is formed by means of the folding alcove accordingly provides enough space that a flight attendant can easily find enough room to help the passengers enter or exit the aircraft. For example, the alcove created can have a width in the range of from 40 cm to 60 cm, e.g. 50 cm (which in turn can correspond to the width of the alcove wall), and a depth in the range of for example 10 cm to 40 cm, e.g. 15 cm or 30 cm.

According to one development, the sanitary module can further comprise a lock. The lock can be designed to fix the folding alcove in the folded-out state and/or the folded-in state. This development has the advantage that the folding alcove is folded in or out only when required, and as a result, is fixed in such a way that said alcove can be moved again only by operating the lock once more. In this development, for example passengers can be prevented from operating the folding alcove without authorisation. Such a lock can be implemented for example by means of one or more bolts which can be operated mechanically or electronically.

According to one development, the lock can be operated from outside the sanitary module. In principle, it would be conceivable for example for the lock to be able to be operated by means of the cabin management system. Alternatively, for example, a bolt, lever or the like can be provided in the region of the alcove wall outside the sanitary module in the region of the aircraft door.

According to one development, the alcove wall can be in the form of sandwich panels and/or can be constructed from sandwich panels. For example, the alcove wall can be a thin casing wall or casing panels or the like.

According to one development, the folding alcove can be directly adjacent to the aircraft door. This is advantageous in that the relevant flight attendant can occupy an ideal position in order to come to the aid of a passenger in the region of the entry door.

According to one development, the aircraft door region can further comprise a second aircraft door which is opposite the first aircraft door inside the aircraft. The aircraft door region can further comprise a second entry region which is adjacent to the second aircraft door. The aircraft door region can further comprise a galley which is adjacent to the second entry region and is formed having an operating region which is opposite the sanitary module. The first aircraft door can be positioned on the right in the direction of flight of the aircraft, and the second aircraft door can be positioned on the left in the direction of flight. This development opens up further advantageous possibilities of creating additional space inside an aircraft door region by arranging a sanitary module comprising a folding alcove in conjunction with a galley in a particularly advantageous manner.

The aircraft door region can further comprise a cockpit door which is designed to be opened between the sanitary module and the galley. The cockpit door can be designed having an aircrew seat which can be folded out.

The configurations and developments above can be combined with one another as desired where appropriate. Further possible configurations, developments and implementations of the invention also do not comprise explicitly mentioned combinations of features of the invention described previously or in the following with respect to the embodiments. In particular, in the process a person skilled in the art will also add individual aspects as improvements or additions to the respective basic form of the present invention.

The present invention will be described in greater detail below on the basis of the embodiments shown in the schematic drawings, in which:
- Fig. 1a and 1b: are schematic plan views of an aircraft door region comprising an aircraft door and comprising a sanitary module having a folding alcove according to one embodiment of the invention, the folding alcove being in a folded-in state in Fig. 1a and in a folded-out state in Fig. 1b.
- Fig. 2: shows schematic plan views of the folding alcove from Fig. 1a and 1b in various folding states;
- Fig. 3: is a schematic side view of an aircraft comprising the aircraft door from Fig. 1a and 1b; and
- Fig. 4: is a schematic plan view of an aircraft door region comprising two aircraft doors and a sanitary module having a folding alcove according to another embodiment of the invention.

The accompanying figures are intended to provide further understanding of the embodiments of the invention. They illustrate embodiments and are used, in conjunction with the description, to explain principles and concepts of the invention. Other embodiments and many of the above-mentioned advantages can be found in the drawings. The elements of the drawings are not necessarily shown to scale with respect to one another.

In the figures of the drawings, elements, features and components which are like, functionally like or have the same effect - unless otherwise specified - are each provided with the same reference numerals.

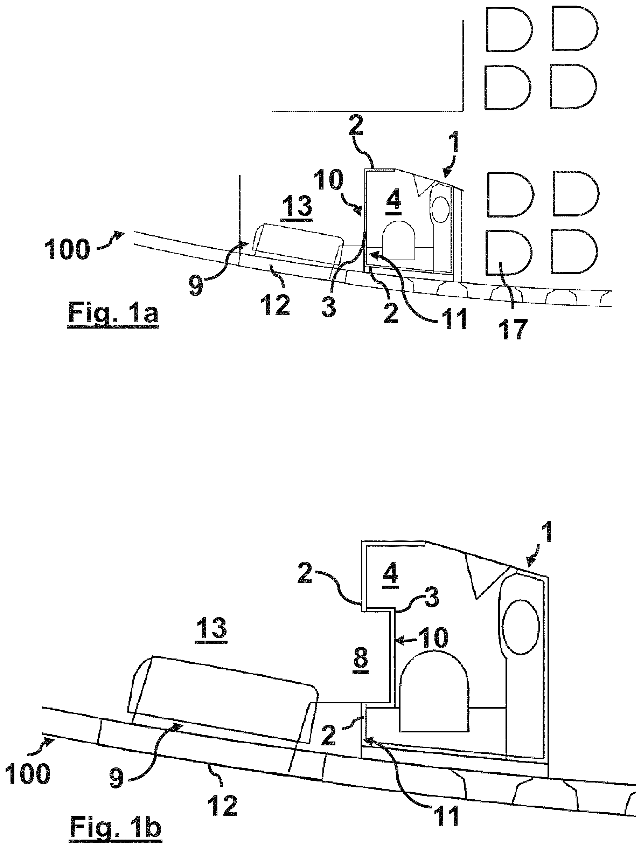

Fig. 1a and 1b are schematic plan views of an aircraft door region comprising an aircraft door and comprising a sanitary module having a folding alcove according to one embodiment of the invention. In Fig. 1a, the folding alcove is in a folded-in state, and in Fig. 1b, in a folded-out state. In this case, Fig. 1b shows an enlarged detail of Fig. 1a.

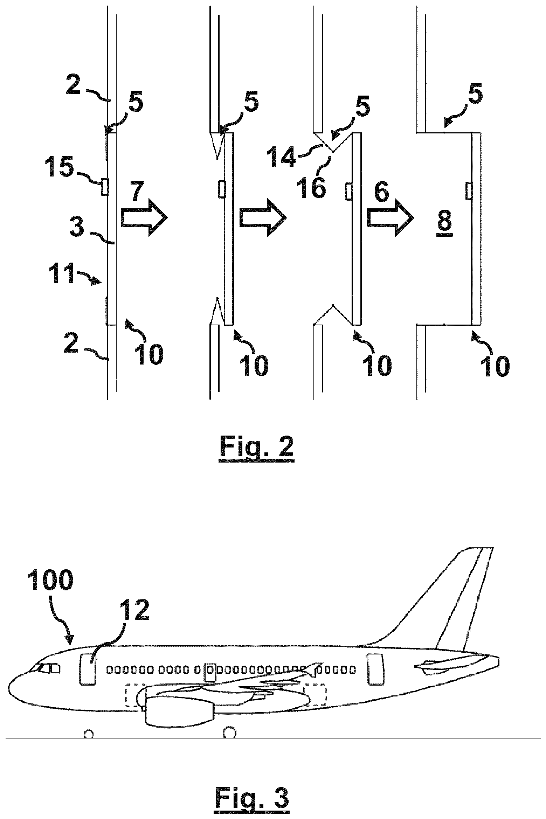

In Fig. 1a, the reference numeral 100 denotes an aircraft, for example a passenger aircraft. The aircraft 100 comprises an aircraft door region 9 having an aircraft door 12, to which an entry region 13 is adjacent inside the aircraft 100. For example, Fig. 3 is a schematic side view of such an aircraft 100 comprising the aircraft door 12 from Fig. 1a and 1b. Directly adjacent to the entry region 13 and the aircraft door 12, there is a sanitary module 1, an outer wall 11 of the sanitary module 1 forming a side wall of the entry region 13. A region for the aircrew (no reference numeral) is joined to the left of the entry region 13, and to the right of the entry region 13, a central aisle (likewise no reference numeral) leads from the entry region 13 approximately at a right angle to the passenger seats (no reference numeral). The sanitary module 1 comprises an inner space 4, which can be equipped for example with a toilet, a shower, a washstand, etc.

The outer wall 11 of the sanitary module 1 is divided into a side wall 2 and an alcove wall 3. In this case, the side wall 2 forms a stationary vertical portion of the outer wall 11, whereas the alcove wall 3 forms a movable vertical portion of the outer wall 11. In particular, the alcove wall 3 is designed to be movable in such a way that it can be moved into the inner space 4 of the sanitary module 1. For example, the alcove wall 3 can be designed in such a way that it can be moved into the inner space 4 by a person standing in the entry region 13 simply pressing with their hands. Alternatively or additionally, other mechanical and/or electronic solutions are also provided. Thus for example a lever can be provided, or an electronic switching device, by means of which a movement of the alcove wall 3 into the inner space 4 can be triggered.

In principle, the alcove wall 3 forms part of a folding alcove 10, which is explained in detail below with reference to Fig. 2. The alcove wall 3 can be moved into the inner space 4 of the sanitary module 1 to create a folded-out state of the folding alcove 10 so that an alcove 8 is created in the outer wall 11 of the sanitary module 1. Fig. 1a shows a folded-in state of the folding alcove 10, in which the alcove wall 3 is in contact with the side wall 2, and ends substantially flush with the side wall 2. Fig. 1b shows a folded-out state of the folding alcove 10, in which the alcove wall 3 has been moved into the inner space 4 of the sanitary module 1. The outer wall 11 of the sanitary module 1 comprises an alcove 8 in this case. Said alcove 8 can be used for example as an assist space or the like in order to allow the aircrew to assist passengers entering or exiting through the aircraft door in specific flight situations (for example during entry or exit or in the event of emergency evacuations). For this purpose, the flight attendants can fold the folding alcove 10 into the inner space 4 of the sanitary module 1 and enter the alcove 8. Optionally, it can be provided that the flight attendants check the inner space 4 of the sanitary module 1 beforehand and/or lock it to prevent it being used. This can be carried out for example directly by the flight attendants by means of a visual inspection. In principle, however, semi or fully automated solutions are also provided in which a cabin management system or the like indicates whether the sanitary module 1 is occupied or not, and the folding alcove 10 is locked or released on this basis; for example, for this purpose, a mechanical or electronic lock 15 can be provided for the folding alcove 10. In particularly simple solutions, the folding alcove 10 can be designed to be simply operated by hand. Alternatively or additionally, however, solutions are also provided in which the folding alcove 10 can be triggered electronically, for example by means of the cabin management system. In all other flight situations in which the assist space is not required, the folding alcove 10 can be folded in so that the sanitary module 1 can be used without any restrictions, i.e. in particular the inner space 4 is fully available for the sanitary module 1.

A person skilled in the art will derive various solutions as to how the folding alcove 10 is closed at the floor or ceiling of the aircraft 100 or the passenger cabin or the sanitary module 1. Thus for example it can be provided that the lock 15 is designed to fix the folding alcove 10, i.e. the alcove wall 3 and/or the folding connections 5, in the folded-out state and/or the folded-in state in a floor of the aircraft 100 or the sanitary module 1. For example, guide rails or grooves or the like can be provided in which the components of the folding alcove 10 can move along the ceiling at the top and along the floor at the bottom of the aircraft 100 (or the passenger cabin or the sanitary module 1) and/or in which said components can be engaged.

Fig. 2 shows schematic plan views of the folding alcove 10 from Fig. 1a and 1b in various folding states.

As explained above, the outer wall 11 of the sanitary module 1 is divided into a stationary side wall 2 and a movable alcove wall 3. The alcove wall 3 together with two folding connections 5 forms a folding alcove 10. The folding connections 5 each connect a vertical longitudinal edge of the alcove wall 3 to a vertical longitudinal edge of the side wall 2. The folding connections 5 can be folded out into the inner space 4 of the sanitary module 1. For this purpose, each folding connection 5 comprises two folding walls 14, which are interconnected in each case. One of the folding walls 14 is additionally connected to the side wall 2 in each case, whereas the other folding wall 14 is coupled to the alcove wall 3 in each case. The folding walls 14 are interconnected by means of vertical hinged joints 16 or the like. The alcove wall 3 can thus be moved into the inner space 4 of the sanitary module 1 to create a folded-out state 6 of the folding alcove 10, the folding connections 5 being folded out into the inner space 4 and, as a result, an alcove 8 being created in the outer wall 11 of the sanitary module 1. The sequence of a folding-out process is indicated by arrows from left to right in Fig. 2. Starting from a folded-in state 7 of the folding alcove 10, in which the alcove wall 3 is in contact with the side wall 2, and the folding connections 5 are folded in, the alcove wall 3 can be moved into the inner space 4 of the sanitary module 1 until a completely folded-out state 6 of the folding alcove 10 is created, in which the folding connections 5 are folded out to the maximum extent, and the alcove wall 3 is moved into the inner space 4 to the maximum extent. The design shown of the folding alcove 10, and in particular the configuration of the folding connections 5, is shown merely by way of example, and a person skilled in the art will accordingly derive solutions which have the same effect in an obvious manner. For example, the folding connections 5 can consist of a greater or smaller number of folding walls 14. Alternatively, a different mechanism for creating a folding connection 5 can additionally be selected which allows the folding alcove 10 to be folded into the inner space 4 in a corresponding manner.

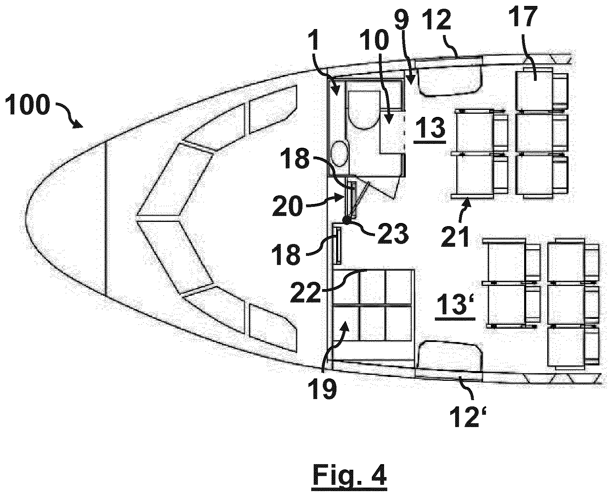

Fig. 4 is a schematic plan view of an aircraft door region 9 comprising two aircraft doors 12, 12' and a sanitary module 1 having a folding alcove 10 according to another embodiment of the invention.

The aircraft door region 9 shown in Fig. 4 is located in a front cabin region of a passenger aircraft 100 comprising an aisle (e.g. a standard-body aircraft or a narrow-body aircraft). The aircraft door region 9 comprises a first aircraft door 12 on the right-hand side of the passenger aircraft 100 in the direction of flight and a second aircraft door 12' on the left-hand side in the direction of flight. A first entry region 13 and a second entry region 13' respectively is adjacent to the respective aircraft door 12, 12' inside the passenger aircraft 100.

Adjacent to the first entry region 13 and the first aircraft door 12, there is a sanitary module 1, which comprises a door for entry to the aisle of the aircraft 100. In this case, the sanitary module 1 can have a similar design to that in Fig. 1a and 1b. Similarly to in Fig. 1a and 1b, an outer wall 11 of the sanitary module 1 forms a side wall of the first entry region 13. Analogously to the sanitary module 1 from Fig. 1a and 1b, this sanitary module 1 is also formed in particular having a folding alcove 10 which is adjacent to the entry region 13 and thus can be used to optionally create an assist space for using the first aircraft door 12.

Adjacent to the second entry region 13' and the second aircraft door 12', there is a galley 19, the operating region 23 of which is formed opposite the door for entry to the sanitary module 1 along the aisle of the aircraft 100. This basic arrangement of the aircraft door region 9 according to the embodiment in Fig. 4 is thus virtually a mirror image of conventional arrangements of aircraft door regions of passenger aircraft having an aisle. In conventional configurations, a sanitary module is located on the left-hand side in the direction of flight, whereas the galley is correspondingly located on the right-hand side. The operating region of such galleys is also frequently rotated by 90° with respect to that in Fig. 4, i.e. the galley in conventional single-aisle arrangements can be operated from the region transversely to the aisle (corresponding to the first entry region 13 in Fig. 4). The new type of arrangement based on the present invention which is shown in Fig. 4 provides a considerable gain in space inside the aircraft door region 9 with respect to this conventional aircraft door region. The operating region 23 of the galley 19 can thus be operated from the aisle so that the first entry region 13 can be designed to be considerably narrower than in conventional arrangements in which the galley is used from this region. Aircrew seats 18 can for example be attached at the top of the aisle in such a way that they can be folded out, as shown in Fig. 4. For this purpose, Fig. 4 shows by way of example an aircrew seat 18 which is attached to the wall of the top of the aisle, and an aircrew seat 18 which is attached to a cockpit door 20 in such a way that it can be folded out. The cockpit door 20 can be designed for example in such a way that it can be opened into the aisle between the sanitary module 1 and the galley 19, for example a corresponding door hinge 22 can be coupled to the cockpit door 20 on the left-hand side (indicated in Fig. 4). The space gained thereby inside the aircraft door region 9 opens up the possibility of accommodating an additional row of seats 21 comprising for example 2 passenger seats in the passenger cabin (foremost row of seats 21 in Fig. 4). In the second entry region 13' of the second aircraft door 12', for example a gap in a row of seats can provide an assist space (at the bottom in Fig. 4).

In the description detailed above, various features for improving the conclusiveness of the description are summarised in one or more examples. However, it should be clear in this case that the description above is of a merely illustrative and in no way restrictive nature. It is intended to cover all alternatives, modifications and equivalents of the various features and embodiments. Many other examples will immediately be clear to a person skilled in the art in view of the above description due to their specialist knowledge.

The embodiments have been selected and described in order to optimally represent the principles forming the basis of the invention and the possible applications thereof in practice. As a result, persons skilled in the art can optimally modify and use the invention and the various embodiments thereof with respect to the intended purpose thereof. In the claims and the description, the terms "containing" and "including" are used as neutral terminology for the corresponding term "comprising". Furthermore, use of the terms "a" and "one" should not in principle exclude a plurality of features and components described in this way.

### List of reference numerals

- 1: sanitary module
- 2: side wall
- 3: alcove wall
- 4: inner space
- 5: folding connection
- 6: folded-out state
- 7: folded-in state
- 8: alcove
- 9: aircraft door region
- 10: folding alcove
- 11: outer wall
- 12: first aircraft door
- 12': second aircraft door
- 13: first entry region
- 13': second entry region
- 14: folding wall
- 15: lock
- 16: hinged joint
- 17: passenger seat
- 18: aircrew seat
- 19: galley
- 20: cockpit door
- 21: row of seats
- 22: door hinge
- 23: operating region
- 100: aircraft

## Claims

1. Sanitary module (1), comprising a folding alcove (10), for an aircraft (100), having:
a side wall (2) which forms a stationary vertical portion of an outer wall (11) of the sanitary module (1);
an alcove wall (3) which forms a movable vertical portion of the outer wall (11) of the sanitary module (1) and can be moved into an inner space (4) of the sanitary module (1); and
two folding connections (5), which each connect a vertical longitudinal edge of the cubicle alcove wall (3) to a vertical longitudinal edge of the side wall (2) and form the folding alcove (10) together with the alcove wall (3);
wherein the folding connections (5) can be folded out into the inner space (4) of the sanitary space (1) so that the alcove wall (3) can be moved into the inner space (4) of the sanitary module (1) to create a folded-out state (6) of the folding alcove (10) in such a way that an alcove (8) is formed in the outer wall (11) of the sanitary module (1) by the alcove wall (3) and the folding connections (5); and
wherein the folding connections (5) can be folded in to create a folded-in state (7) of the folding alcove (10) in such a way that the alcove wall (3) is in contact with the side wall (2).

2. Sanitary module (1) according to claim 1, wherein the folding connections (5) each comprise one or more folding walls (14) which are connected to one another and/or to the side wall (2) and/or to the alcove wall (3).

3. Sanitary module (1) according to claim 2, wherein the folding walls (14) are connected by means of vertical hinged joints (16).

4. Sanitary module (1) according to either claim 2 or claim 3, wherein the folding walls (14) are designed to be flexible.

5. Sanitary module (1) according to any of the preceding claims, wherein the alcove wall (3) in the folded-in state of the folding alcove (10) ends flush with the side wall (2).

6. Sanitary module (1) according to any of the preceding claims, wherein the folding alcove (10) is dimensioned in such a way that the alcove (8) can accommodate a standing person fully or at least to a large extent in the folded-out state (6) of the folding alcove (10).

7. Sanitary module (1) according to any of the preceding claims, further comprising a lock (15) which is designed to fix the folding alcove (10) in the folded-out state (6) or the folded-in state (7).

8. Sanitary module (1) according to claim 7, wherein the lock (15) can be operated from outside the sanitary module (1).

9. Sanitary module (1) according to any of the preceding claims, wherein the alcove wall (3) is in the form of sandwich panels and/or is constructed from sandwich panels.

10. Aircraft door region (9) of an aircraft (100), comprising:
a first aircraft door (12);
a first entry region (13) which is adjacent to the first aircraft door (12); and
a sanitary module (1) according to any of claims 1 to 9, the outer wall (11) of which is adjacent to the first entry region (13);
wherein the folding alcove (10) of the sanitary module (1) is formed in a portion of the outer wall (11) of the sanitary module (1) which faces the first entry region (13).

11. Aircraft door region (9) according to claim 10, wherein the folding alcove (10) is directly adjacent to the first aircraft door (12).

12. Aircraft door region (9) according to either claim 10 or claim 11, further comprising:
a second aircraft door (12') which is opposite the first aircraft door (12) inside the aircraft (100);
a second entry region (13') which is adjacent to the second aircraft door (12'); and
a galley (19) which is adjacent to the second entry region (13') and is formed having an operating region (23) which is opposite the sanitary module (1);
wherein the first aircraft door (12) is positioned on the right in the direction of flight of the aircraft (100), and the second aircraft door (12') is positioned on the left in the direction of flight.

13. Aircraft door region (9) according to claim 12, further comprising:
a cockpit door (20) which is designed to be opened between the sanitary module (1) and the galley (19), wherein the cockpit door (20) is formed having an aircrew seat (18) which can be folded out.

14. Aircraft (100) comprising an aircraft door region (9) according to any of claims 10 to 13.

## Patentansprüche

1. Sanitärmodul (1), eine Faltnische (10) für ein Flugzeug (100) umfassend, die Folgendes aufweist:
eine Seitenwand (2), die einen feststehenden vertikalen Abschnitt einer Außenwand (11) des Sanitärmoduls (1) bildet;
eine Nischenwand (3), die einen beweglichen vertikalen Abschnitt der Außenwand (11) des Sanitärmoduls (1) ausbildet und in einen Innenraum (4) des Sanitärmoduls (1) hineinbewegbar ist; und
zwei Faltverbindungen (5), die jeweils eine vertikale Längskante der Kabinennischenwand (3) mit einer vertikalen Längskante der Seitenwand (2) verbinden und zusammen mit der Nischenwand (3) die Faltnische (10) ausbilden;
wobei die Faltverbindungen (5) in den Innenraum (4) des Sanitärraums (1) hinein ausfaltbar sind, sodass die Nischenwand (3) zur Schaffung eines ausgefalteten Zustands (6) der Faltnische (10) in den Innenraum (4) des Sanitärmoduls (1) derart hineinbewegbar ist, dass von der Nischenwand (3) und den Faltverbindungen (5) eine Nische (8) in der Außenwand (11) des Sanitärmoduls (1) ausgebildet wird; und
wobei die Faltverbindungen (5) zur Schaffung eines eingefalteten Zustands (7) der Faltnische (10) derart einfaltbar sind, dass die Nischenwand (3) an der Seitenwand (2) anliegt.

2. Sanitärmodul (1) nach Anspruch 1, wobei die Faltverbindungen (5) jeweils eine oder mehrere Faltwände (14) umfassen, die miteinander und/oder mit der Seitenwand (2) und/oder mit der Nischenwand (3) verbunden sind.

3. Sanitärmodul (1) nach Anspruch 2, wobei die Faltwände (14) mittels vertikaler Drehgelenke (16) verbunden sind.

4. Sanitärmodul (1) nach Anspruch 2 oder 3, wobei die Faltwände (14) flexibel ausgestaltet sind.

5. Sanitärmodul (1) nach einem der vorstehenden Ansprüche, wobei die Nischenwand (3) in dem eingefalteten Zustand der Faltnische (10) bündig mit der Seitenwand (2) abschließt.

6. Sanitärmodul (1) nach einem der vorstehenden Ansprüche, wobei die Faltnische (10) so dimensioniert ist, dass die Nische (8) eine stehende Person ganz oder zumindest zu einem großen Teil in dem ausgefalteten Zustand (6) der Faltnische (10) aufnehmen kann.

7. Sanitärmodul (1) nach einem der vorstehenden Ansprüche, ferner eine Verriegelung (15) umfassend, die dazu ausgestaltet ist, die Faltnische (10) in dem ausgefalteten Zustand (6) und/oder dem eingefalteten Zustand (7) zu fixieren.

8. Sanitärmodul (1) nach Anspruch 7, wobei die Verriegelung (15) von außerhalb des Sanitärmoduls (1) bedienbar ist.

9. Sanitärmodul (1) nach einem der vorstehenden Ansprüche, wobei die Nischenwand (3) als Sandwich-Paneele ausgebildet ist und/oder aus Sandwich-Paneelen aufgebaut ist.

10. Flugzeugtürbereich (9) eines Flugzeugs (100), Folgendes umfassend:
eine erste Flugzeugtür (12);
einen ersten Eingangsbereich (13), der an die erste Flugzeugtür (12) angrenzt; und
ein Sanitärmodul (1) nach einem der Ansprüche 1 bis 9, das mit der Außenwand (11) an den ersten Eingangsbereich (13) angrenzt;
wobei die Faltnische (10) des Sanitärmoduls (1) in einem dem ersten Eingangsbereich (13) zugewandten Abschnitt der Außenwand (11) des Sanitärmoduls (1) ausgebildet ist.

11. Flugzeugtürbereich (9) nach Anspruch 10, wobei die Faltnische (10) direkt an die erste Flugzeugtür (12) angrenzt.

12. Flugzeugtürbereich (9) nach Anspruch 10 oder 11, ferner Folgendes umfassend:
eine zweite Flugzeugtür (12'), die im Flugzeug (100) der ersten Flugzeugtür (12) gegenüberliegt;
einen zweiten Eingangsbereich (13'), der an die zweite Flugzeugtür (12') angrenzt; und
eine Bordküche (19), die an den zweiten Eingangsbereich (13') angrenzt und mit einem dem Sanitärmodul (1) gegenüberliegenden Betriebsbereich (23) ausgebildet ist;
wobei die erste Flugzeugtür (12) in Flugrichtung des Flugzeugs (100) auf der rechten Seite angeordnet ist und die zweite Flugzeugtür (12') in Flugrichtung auf der linken Seite angeordnet ist.

13. Flugzeugtürbereich (9) nach Anspruch 12, ferner Folgendes umfassend:
eine Cockpittür (20), die dazu ausgestaltet ist, zwischen dem Sanitärmodul (1) und der Bordküche (19) geöffnet zu werden, wobei die Cockpittür (20) mit einem ausklappbaren Flugpersonalsitz (18) ausgebildet ist.

14. Flugzeug (100), das einen Flugzeugtürbereich (9) nach einem der Ansprüche 10 bis 13 umfasst.

## Revendications

1. Module sanitaire (1), comprenant une alcôve pliante (10), pour un aéronef (100), ayant :
une paroi latérale (2) qui forme une portion verticale stationnaire d'une paroi extérieure (11) du module sanitaire (1) ;
une paroi d'alcôve (3) qui forme une portion verticale mobile de la paroi extérieure (11) du module sanitaire (1) et peut être déplacée dans un espace intérieur (4) du module sanitaire (1) ; et
deux raccords pliants (5), qui raccordent chacun un bord longitudinal vertical de la paroi d'alcôve de cabine de toilettes (3) à un bord longitudinal vertical de la paroi latérale (2) et forment l'alcôve pliante (10) conjointement avec la paroi d'alcôve (3) ;
dans lequel les raccords pliants (5) peuvent être dépliés dans l'espace intérieur (4) de l'espace sanitaire (1) pour que la paroi d'alcôve (3) puisse être déplacée dans l'espace intérieur (4) du module sanitaire (1) pour créer un état déplié (6) de l'alcôve pliante (10) de manière telle qu'une alcôve (8) soit formée dans la paroi extérieure (11) du module sanitaire (1) par la paroi d'alcôve (3) et les raccords pliants (5) ; et
dans lequel les raccords pliants (5) peuvent être pliés dans pour créer un état replié (7) de l'alcôve pliante (10) de manière telle que la paroi d'alcôve (3) soit en contact avec la paroi latérale (2).

2. Module sanitaire (1) selon la revendication 1, dans lequel les raccords pliants (5) comprennent chacun une ou plusieurs parois pliantes (14) qui sont raccordées les unes aux autres et/ou à la paroi latérale (2) et/ou à la paroi d'alcôve (3).

3. Module sanitaire (1) selon la revendication 2, dans lequel les parois pliantes (14) sont raccordées au moyen de joins articulés verticaux (16).

4. Module sanitaire (1) selon la revendication 2 ou la revendication 3, dans lequel les parois pliantes (14) sont conçues pour être flexibles.

5. Module sanitaire (1) selon l'une quelconque des revendications précédentes, dans lequel la paroi d'alcôve (3) dans l'état replié de l'alcôve pliante (10) finit en alignement avec le paroi latérale (2).

6. Module sanitaire (1) selon l'une quelconque des revendications précédentes, dans lequel l'alcôve pliante (10) est dimensionnée de manière telle que l'alcôve (8) puisse loger une personne debout entièrement ou, au moins en grande mesure, dans l'état déplié (6) de l'alcôve pliante (10).

7. Module sanitaire (1) selon l'une quelconque des revendications précédentes, comprenant en outre un verrou (15) qui est conçu pour fixer l'alcôve pliante (10) dans l'état déplié (6) ou l'état replié (7).

8. Module sanitaire (1) selon la revendication 7, dans lequel le verrou (15) peut être actionné à partir de l'extérieur du module sanitaire (1).

9. Module sanitaire (1) selon l'une quelconque des revendications précédentes, dans lequel la paroi d'alcôve (3) est sous la forme de panneaux sandwich et/ou est construite à partir de panneaux sandwich.

10. Région de porte d'aéronef (9) d'un aéronef (100), comprenant :
une première porte d'aéronef (12) ;
une première région d'entrée (13) qui est adjacente à la première porte d'aéronef (12) ; et
un module sanitaire (1) selon l'une quelconque des revendications 1 à 9, dont la paroi extérieure (11) est adjacente à la première région d'entrée (13) ;
dans laquelle l'alcôve pliante (10) du module sanitaire (1) est formée dans une portion de la paroi extérieure (11) du module sanitaire (1) qui fait face à la première région d'entrée (13).

11. Région de porte d'aéronef (9) selon la revendication 10, dans laquelle l'alcôve pliante (10) est directement adjacente à la première porte d'aéronef (12).

12. Région de porte d'aéronef (9) selon la revendication 10 ou la revendication 11, comprenant en outre :
une seconde porte d'aéronef (12') qui est opposée à la première porte d'aéronef (12) à l'intérieur de l'aéronef (100) ;
une seconde région d'entrée (13') qui est adjacente à la seconde porte d'aéronef (12') ; et
un office (19) qui est adjacent à la seconde région d'entrée (13') et est formé ayant une région opérationnelle (23) qui est opposée au module sanitaire (1) ;
dans laquelle la première porte d'aéronef (12) est positionnée sur la droite dans la direction de vol de l'aéronef (100), et la seconde porte d'aéronef (12') est positionnée sur la gauche dans la direction de vol.

13. Région de porte d'aéronef (9) selon la revendication 12, comprenant en outre :
une porte de poste de pilotage (20) qui est conçue pour être ouverte entre le module sanitaire (1) et l'office (19), dans laquelle la porte de poste de pilotage (20) est formée ayant un siège d'équipage (18) qui peut être déplié.

14. Aéronef (100), comprenant une région de porte d'aéronef (9) selon l'une quelconque des revendications 10 à 13.
